# EUROPÄISCHE PATENTANMELDUNG

(11) **EP 2 138 917 A1**
(43) Veröffentlichungstag der Anmeldung: **30.12.2009**
(21) Anmeldenummer: 08011624.7
(22) Anmeldetag: 26.06.2008
(51) Int. Cl.: G05B 19/418, H02P 5/68, H02P 5/74, H02P 8/40

(54) **Verfahren zur Synchronisation einer Mehrzahl von Antrieben sowie nach dem Verfahren betreibbarer Antrieb**

(71) Anmelder: Siemens Aktiengesellschaft, 80333 München (DE)
(72) Erfinder: Götze, Thomas, 09113 Chemnitz (DE); Olomski, Jürgen, Dr., 91074 Herzogenaurach (DE)

(57) **Zusammenfassung**

Um Konturabweichungen bei einer Mehrzahl von Antrieben (12-16) zu vermeiden und um andererseits den Aufwand für eine dafür erforderliche Synchronisierung zu begrenzen, wird vorgeschlagen, dass eine zur Ansteuerung eines Antriebs (12-16) in jedem Fall erforderliche Leitung, z. B. die Enable-Leitung (28), zusätzlich verwendet wird, um einen Taktimpuls synchron an jeden in einer Hierarchie mit übergeordneter Einheit (18) einerseits und einer Mehrzahl koordinierter Antriebe (12-16) als "Slave" andererseits an derartige Slaves zu senden. Auf einen derartigen Taktimpuls, also das Synchronisationssignal (34), kann jeder Antrieb (12-16) synchronisieren, wobei dafür z. B. eine Software-PLL vorgesehen ist. Der Taktimpuls, also der Statuswechsel des Aktivierungseingangs (30), muss taktsynchron zum von der übergeordneten Einheit (18) vorgegebenen Lagereglertakt erfolgen und darf nur eine kurze definierte Länge aufweisen. Die Antriebe (12-16) wiederum müssen so ausgelegt werden, dass sie einen Impuls der definierten Länge als Taktimpuls erkennen und einen längeren Impuls, also ein längeres Ausschalten des Drive-Enable-Signals, als Wegnahme des Drive-Enables, also als Deaktivierung des jeweiligen Antriebs (12-16), auswerten.

## Beschreibung

Die Erfindung betrifft ein Verfahren zur Synchronisation mehrerer entfernt voneinander angeordneter, also verteilter, und über eine Schnittstelle und ein Kommunikationsmedium mit einer übergeordneten Einheit verbundener Antriebe.

Ein derartiges Verfahren und nach einem solchen Verfahren betreibbare Antriebe sind an sich bekannt. Bei einfachen automatisierten Maschinen mit einer Mehrzahl von Antrieben werden häufig so genannte Stepper-Antriebe an einer Puls-Richtung-Schnittstelle von einer übergeordneten Steuerung als Beispiel für eine übergeordnete Einheit betrieben. Als Beispiel für derartige Maschinen können Werkzeugmaschinen und dergleichen herhalten. Bei Werkzeugmaschinen, aber auch bei anderen Anwendungen, müssen die davon umfassten Antriebe möglichst synchron laufen. Typische Stepper-Antriebe folgen ohne eigenen Takt kontinuierlich den Puls-Richtung-Soll-werten oder phasenverschobenen, sog. A-B-Signalen, aus deren Phasenlage die Richtung ermittelt wird, so dass sich damit implizit eine Synchronizität ergibt. Stepper-Antriebe werden aber mehr und mehr durch Servo-Antriebe ersetzt, die aber weiterhin an einer Puls-Richtung-Schnittstelle oder dergleichen betrieben werden. Diese Antriebe werden deshalb auch als Semi-Servo-Antriebe bezeichnet. Diese intern digital geregelten Antriebe haben aber eine eigene Taktung für die untereinander, also zwischen den z. B. von einer Maschine umfassten Antrieben, keine Synchronisierung erfolgt. Dies kann zu einer Verschiebung der Taktung der einzelnen Semi-Servo-Antriebe führen und, bei z. B. Werkzeugmaschinen, Konturabweichungen und dergleichen verursachen.

Bei traditionellen Antrieben, speziell den o. g. Stepper-Antrieben, tritt eine solche Taktverschiebung und eine dadurch evtl. resultierende Konturabweichung nicht auf, da diese Antriebe quasi analog sind. Bei Antrieben mit einem digitalen Antriebsbus werden spezielle, aufwendige Maßnahmen getroffen, um die Synchronizität zwischen mehreren Antrieben zu erzielen. Als Beispiel solcher Maßnahmen, die im Einzelfall auch zusätzliche Hardware umfassen kann, ist z. B. eine elektronische Schaltung zur Taktsynchronisation (PLL) oder ein zu Synchronisationszwecken versandtes Telegramm (Control Telegram) zu nennen.

Bei Semi-Servo-Antrieben erfolgt deren Ansteuerung durch einen kontinuierlichen Puls-Strom je Lagereglertakt. D. h. alle Sollwertinkremente eines Antriebs (einer Achse der jeweiligen Maschine) werden in einem Lagereglertakt nacheinander in einem konstanten zeitlichen Abstand ausgegeben. Eine Synchronisation zwischen den Antrieben findet nicht statt. Zwar ist der Fehler durch die fehlende Synchronisation zwischen den Antrieben aufgrund des kontinuierlichen Puls-Stromes geringer als bei einem rein digitalen Antriebsbus mit einem konstanten Sollwert je Lagereglertakt, aber eine Verbesserung der Konturgenauigkeit durch eine Synchronisation ist auch bei einem Semi-Servo-Antrieb möglich, und dies ist entsprechend eine Aufgabe der vorliegenden Erfindung.

Diese Aufgabe wird erfindungsgemäß mit den Merkmalen des Anspruchs 1 gelöst. Dazu ist bei einem Verfahren zur Synchronisation mehrerer entfernt voneinander angeordneter und über eine Schnittstelle und ein Kommunikationsmedium mit einer übergeordneten Einheit verbundener Antriebe, wobei die Schnittstelle zumindest einen Aktivierungseingang zur Aktivierung oder Deaktivierung des Antriebs umfasst, vorgesehen, dass zur Synchronisation dem Aktivierungseingang für eine vorgegebene oder vorgebbare Dauer von Seiten der übergeordneten Einheit ein vorgegebener Status eingeprägt und dass antriebsseitig der Wechsel des Aktivierungseingangs auf den vorgegebenen Status als Startsignal für Synchronisationszwecke ausgewertet wird.

Der Vorteil der Erfindung besteht damit darin, dass ein von der Schnittstelle, über die die kommunikative Anbindung der Antriebe erfolgt, ohnehin umfasster Eingang zur Synchronisation benutzt wird, ohne dass die Funktionalität, für die dieser Eingang bisher vorgesehen war, hier also die Aktivierung oder Deaktivierung des Antriebs, nicht mehr zur Verfügung steht. Während also z. B. zur Aktivierung oder Deaktivierung des Antriebs ein dauerhafter Statuswechsel des Aktivierungseingangs vorgesehen ist, kann zur Synchronisation demselben Eingang ein kurzzeitiger Statuswechsel eingeprägt werden, wobei der Statuswechsel unmittelbar als Ausgangspunkt für die Synchronisation verwendet werden kann. Dieser Ansatz für die Synchronisation mehrerer Antriebe ist einfach und ohne zusätzlichen apparativen Aufwand umsetzbar. Er vermeidet insbesondere alternative Möglichkeiten zur Synchronisation mehrerer Antriebe, die die Verwendung einer zusätzlichen Leitung (Clock-Leitung) voraussetzen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die vorgegebene Dauer, während derer dem Aktivierungseingang ein vorgegebener Status zur Auslösung der Synchronisation eingeprägt wird, unterhalb eines Schwellwertes liegt und ein länger als eine durch den Schwellwert ausgedrückte Dauer anstehender Status des Aktivierungseingangs zur Aktivierung oder Deaktivierung des Antriebs ausgewertet wird. Dann ist sichergestellt, dass über ein und denselben Aktivierungseingang der Schnittstelle beide Funktionalitäten, nämlich Synchronisation einerseits und Aktivierung und Deaktivierung des Antriebs andererseits, abgewickelt werden können.

Die Erfindung betrifft auch einen Antrieb, der zur Verwendung in dem oben beschriebenen und nachfolgend weiter ausgeführten Verfahren vorgesehen ist. Dazu ist bei einem Antrieb mit einer Schnittstelle zur kommunikativen Verbindbarkeit mit anderen Antrieben und/oder einer übergeordneten Einheit, wobei die Schnittstelle zumindest einen Aktivierungseingang zur Aktivierung oder Deaktivierung des Antriebs umfasst, vorgesehen, dass der Antrieb Auswertemittel zur Auswertung einer Dauer eines vorgegebenen oder vorgebbaren Status des Aktivierungseingangs umfasst, dass das Auswertemittel im Betrieb ein Synchronisationssignal erzeugt, wenn der Aktivierungseingang einen vorgegebenen Status annimmt, und dass das Auswertemittel im Betrieb ein Sondersignal erzeugt, wenn der vorgegebene Status länger als eine durch einen vorgegebenen oder vorgebbaren Schwellwert kodierte Dauer ansteht. Ein derart ausgestalteter Antrieb kann also über die Schnittstelle übermittelte Daten und an dessen Aktivierungseingang anstehende Stati auswerten, und zwar im Hinblick auf die Dauer, während derer ein bestimmter, vorgegebener oder vorgebbarer Status ansteht. Sobald sich am Aktivierungseingang ein solcher Status einstellt, wird ein Synchronisationssignal erzeugt. Wenn der Status nur eine kurze Zeit ansteht, erfolgt keine weitere Reaktion auf den Zustand des Aktivierungseingangs. Das Synchronisationssignal löst antriebsintern den Synchronisationsvorgang aus. Wenn der Status länger als eine durch den Schwellwert kodierte Dauer ansteht, wird dieser als Signal zur Aktivierung oder Deaktivierung des Antriebs ausgewertet und entsprechend ein Sondersignal generiert. Wenn sichergestellt sein soll, dass dann, wenn über den Aktivierungseingang die Aktivierung oder Deaktivierung des Antriebs ausgelöst werden soll, kein Synchronisationssignal erzeugt wird, kann vorgesehen sein, dass das Synchronisationssignal erst erzeugt wird, wenn der Status des Aktivierungseingangs vom vorgegebenen Status wieder zurückwechselt und wenn dieser Wechsel innerhalb einer Dauer stattfindet, die unterhalb des vorgegebenen Schwellwertes liegt. Es wird also gleichsam das Pulsende ausgewertet, während bei der zunächst beschriebenen Lösung das Synchronisationssignal bereits aufgrund der ersten Flanke, also am Pulsanfang, ausgelöst wird.

Wenn das Synchronisationssignal antriebsintern als Startsignal für Synchronisationszwecke auswertbar ist, ist eine Modularisierung der diesbezüglichen Funktionalität des Antriebs insofern möglich, dass das Synchronisationssignal einer für Synchronisationszwecke von dem Antrieb umfassten Funktionalität einerseits von dem vorbeschriebenen Auswertemittel zuleitbar ist, oder dass, wenn der Antrieb um eine zusätzliche Leitung für Synchronisationszwecke ergänzt wird, das Synchronisationssignal anhand des Status dieser Leitung generierbar ist.

Das oder die Auswertemittel sind bevorzugt eine elektronische Schaltung, die programmgesteuert die einzelnen Verfahrensschritte ausführt, so dass die Erfindung auch ein Computerprogramm mit durch einen Computer ausführbaren Programmcodeanweisungen betrifft, derart, dass z. B. eine das Auswertemittel darstellende elektronische Schaltung kontinuierlich den Status des Aktivierungseingangs überwacht, dass bei z. B. einem Wechsel von dessen Status auf einen vorgegebenen Status das Synchronisationssignal erzeugt wird und dass, wenn dieser Status länger als eine vorgegebene Dauer ansteht, das Sondersignal generiert wird. Insoweit betrifft die Erfindung auch ein Speichermedium, z. B. ein EPROM oder dergleichen, oder, wenn die Implementierung der Erfindung in Form eines Computerprogramms anstelle von Programmcodeanweisungen tatsächlich Mikrocodeanweisungen umfasst, auch einen ASIC, ein FPGA oder dergleichen mit einem solchen Computerprogramm sowie ein Computersystem, auf dem ein derartiges Computerprogramm geladen ist, also insbesondere einen Antrieb mit einem derartigen Auswertemittel oder eine übergeordnete Einheit zur Ansteuerung mehrerer Antriebe, die vorgesehen ist, um zur Synchronisation der jeweils anzusteuernden Antriebe an deren Aktivierungseingang ein Signal vorgegebener Dauer abzugeben, wobei, wenn eine Aktivierung oder Deaktivierung des jeweiligen Antriebs vorgesehen ist, ein Signal abgesetzt wird, das eine Dauer hat, die einen Schwellwert sicher überschreitet.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Darin zeigen

- FIG 1: eine schematisch vereinfachte Darstellung einer Werkzeugmaschine mit mehreren synchron anzusteuernden Antrieben,
- FIG 2: eine Darstellung eines zeitlichen Verlaufs eines Signals zur Ansteuerung der Antriebe und
- FIG 3: eine schematisch vereinfachte Darstellung einer Funktionalität eines Antriebs, wie sie gemäß der Erfindung zu dessen Synchronisierung mit anderen Antrieben vorgeschlagen wird.

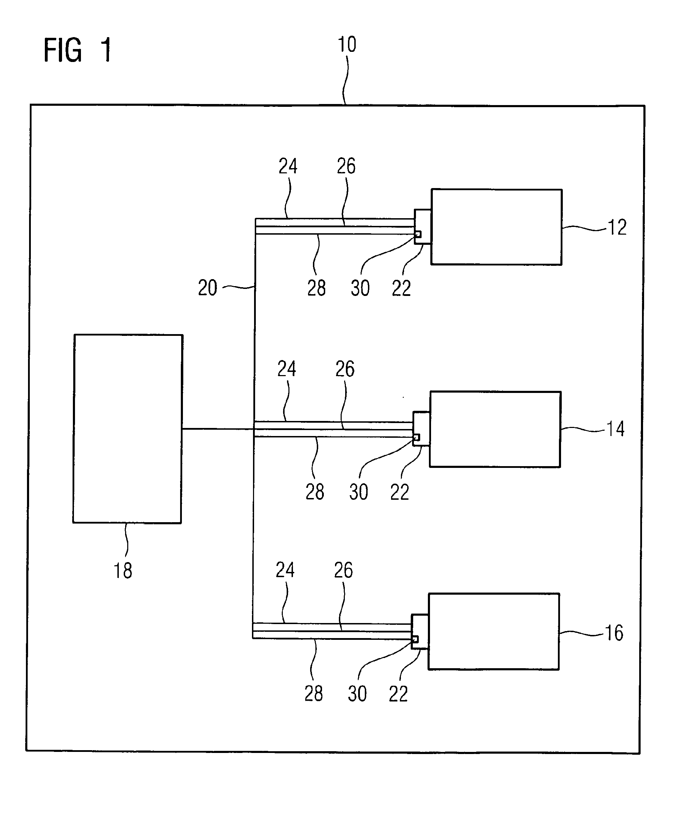

FIG 1 zeigt schematisch vereinfacht eine Werkzeugmaschine 10 als Beispiel für einen Anwendungszweck, bei dem mehrere Antriebe 12, 14, 16 zu synchronisieren sind. Die Antriebe 12-16 sind untereinander und mit einer übergeordneten Einheit 18, also z. B. einer Steuerungseinrichtung der Werkzeugmaschine 10, über ein Kommunikationsmedium 20 verbunden, wobei zum Anschluss des Kommunikationsmediums 20 an den jeweiligen Antrieb 12-16 jeweils eine Schnittstelle 22 vorgesehen ist. Bei den Antrieben 12-16 handelt es sich um Servo-Antriebe und bei der Schnittstelle 22 handelt es sich um eine Puls-Richtung-Schnittstelle, d. h. um eine Schnittstelle, bei der pro übermitteltem Spannungsimpuls der jeweilige Antrieb 12-16 um genau ein Inkrement weiter dreht, die im Folgenden beispielhaft auch für andere ähnliche Schnittstellen, z. B. Schnittstelle mit A-B Signalen, zugrunde gelegt wird. Die Drehrichtung wird dabei über eine zweite von dem Kommunikationsmedium 20 umfasste Leitung bestimmt. Zusätzlich umfasst das Kommunikationsmedium 20 eine Leitung zur Aktivierung oder Deaktivierung des jeweiligen Antriebs 12-16, die entsprechend dem üblichen englischen Sprachgebrauch im Folgenden kurz als Enable-Leitung bezeichnet wird. Das Kommunikationsmedium 20 umfasst also zumindest drei Leitungen, nämlich eine Puls-Leitung 24, eine Richtungsleitung 26 und eine Enable-Leitung 28. Zum Anschluss der Leitungen 24-28 umfasst die Schnittstelle 22 jeweils einen Eingang, wobei der Anschluss für die Enable-Leitung 28 im Folgenden als Aktivierungseingang 30 bezeichnet wird.

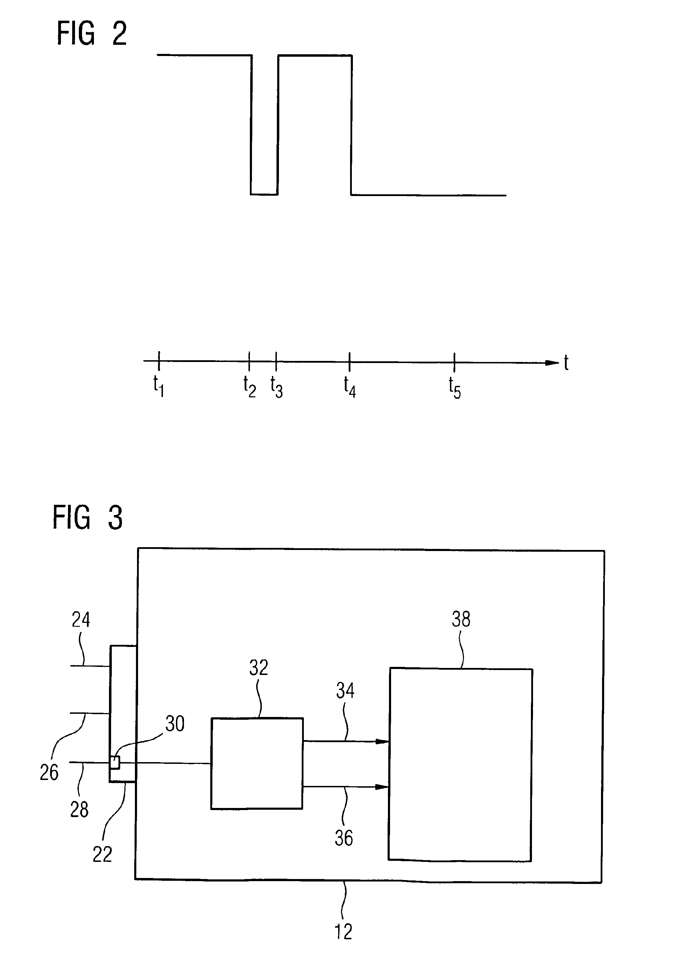

FIG 2 stellt über einer Zeitachse "t" exemplarisch unterschiedliche Zustände des Aktivierungseingangs 30 (FIG 1) dar. Nachdem der Aktivierungseingang 30 grundsätzlich zur Aktivierung oder Deaktivierung des jeweiligen Antriebs 12-16 vorgesehen ist, gibt es zumindest einen Ruhestatus (z. B. High), der an dem Aktivierungseingang 30 normalerweise ansteht (Zeitspanne t₁ bis t₂). Zur Synchronisation jeweils eines Antriebs 12-16 mit anderen, zugehörigen Antrieben 12-16, also z. B. den verbleibenden Antrieben in der gleichen Maschine 10 oder den verbleibenden Antrieben für einen gleichen Bewegungsablauf/-Modus, ist vorgesehen, dass dem Aktivierungseingang 30 des jeweiligen Antriebs 12-16, normalerweise aller von einer Maschine 10 umfassten Antrieben 12-16 oder zumindest Antriebsgruppen, für eine vorgegebene oder vorgebbare Dauer ein vorgegebener Status, also ein vom Ruhestatus abweichender Status, eingeprägt wird (in FIG 2 für die Zeitspanne t₂ bis t₃ gezeigt). Antriebsseitig wird der Wechsel des Status des Aktivierungseingangs 30 als Startsignal für Synchronisationszwecke ausgewertet. Die Dauer, während derer dem Aktivierungseingang 30 für Synchronisationszwecke der vorgegebene Status eingeprägt wird, liegt unterhalb eines vorgegebenen Schwellwertes und ein länger als eine durch den Schwellwert ausgedrückte Dauer anstehender Status des Aktivierungseingangs 30 wird zur Aktivierung oder Deaktivierung des Antriebs 12-16 ausgewertet (in FIG 2 für die Zeitspanne t₄ bis t₅ und weiter dargestellt), wobei der Zeitabstand zwischen t₅ und t₄ als graphische Darstellung des Schwellwertes aufgefasst werden kann.

FIG 3 zeigt weitere Details zu einem in dieser Weise synchronisierbaren Antrieb 12-16. Danach umfasst der Antrieb 12 ein Auswertemittel 32, das den Status des Aktivierungseingangs 30 überwacht. Speziell umfasst diese Überwachung des Aktivierungseingangs 30 eine Auswertung einer Dauer eines vorgegebenen oder vorgebbaren Status des Aktivierungseingangs 30. In Ansehung des Anstehens eines solchen vorgegebenen oder vorgebbaren Status und speziell in Ansehung einer Dauer, während derer dieser Status ansteht, erzeugt das Auswertemittel 32 im Betrieb ein Synchronisationssignal 34 oder ein Sondersignal 36. Das Synchronisationssignal 34 kann erzeugt werden, sobald der Aktivierungseingang 30 den vorgegebenen Status annimmt (bei der Darstellung gemäß FIG 2 also in etwa zu dem Zeitpunkt t₂) oder wenn feststeht, dass der vorgegebene Status nicht länger als eine durch den Schwellwert ausgedrückte Dauer ansteht (in der Darstellung gemäß FIG 2 also in etwa zu dem Zeitpunkt t₃). Das Sondersignal 36 wird demgegenüber erzeugt, wenn der vorgegebene Status länger als eine durch den Schwellwert kodierte Dauer ansteht (bei der Darstellung in FIG 2 in etwa zu dem Zeitpunkt t₅).

Das Synchronisationssignal 34 und das Sondersignal 36 werden innerhalb des Antriebs 12 ausgewertet, z. B. von einer Antriebssteuerungseinheit 38, wobei das Synchronisationssignal 34 für Synchronisationszwecke ausgewertet wird und das Sondersignal 36 zur Aktivierung oder Deaktivierung des Antriebs ausgewertet wird.

Kurz gefasst lässt sich die vorliegende Erfindung damit wie folgt beschreiben: Um Konturabweichungen bei einer Mehrzahl von Antrieben 12-16 zu vermeiden und um andererseits den Aufwand für eine dafür erforderliche Synchronisierung zu begrenzen, wird vorgeschlagen, dass eine zur Ansteuerung eines Antriebs 12-16 in jedem Fall erforderliche Leitung, z. B. die Enable-Leitung 28, zusätzlich verwendet wird, um einen Taktimpuls synchron an jeden in einer Hierarchie mit übergeordneter Einheit 18 einerseits und einer Mehrzahl koordinierter Antriebe 12-16 als "Slave" andererseits an derartige Slaves zu senden. Auf einen derartigen Taktimpuls, also das Synchronisationssignal 34, kann jeder Antrieb 12-16 synchronisieren, wobei dafür z. B. eine Software-PLL vorgesehen ist. Der Taktimpuls, also der Statuswechsel des Aktivierungseingangs 30, muss taktsynchron zum von der übergeordneten Einheit 18 vorgegebenen Lagereglertakt erfolgen und darf nur eine kurze definierte Länge aufweisen. Die Antriebe 12-16 wiederum müssen so ausgelegt werden, dass sie einen Impuls der definierten Länge als Taktimpuls erkennen und einen längeren Impuls, also ein längeres Ausschalten des Drive-Enable-Signals, als Wegnahme des Drive-Enables, also als Deaktivierung des jeweiligen Antriebs 12-16, auswerten.

## Patentansprüche

1. Verfahren zur Synchronisation mehrerer entfernt voneinander angeordneter und über einer Schnittstelle (22) und ein Kommunikationsmedium (20) mit einer übergeordneten Einheit (18) verbundener Antriebe, wobei die Schnittstelle (22) zumindest einen Aktivierungseingang (30) zur Aktivierung oder Deaktivierung des Antriebs (12-16) umfasst,
**dadurch gekennzeichnet, dass**
zur Synchronisation dem Aktivierungseingang (30) für eine vorgegebene oder vorgebbare Dauer ein vorgegebener Status eingeprägt wird und
antriebsseitig der Wechsel des Aktivierungseingangs (30) auf den vorgegebenen Status als Startsignal für Synchronisationszwecke ausgewertet wird.

2. Verfahren nach Anspruch 1, wobei die vorgegebene Dauer unterhalb eines Schwellwertes liegt und ein länger als eine durch den Schwellwert ausgedrückte Dauer anstehender Status des Aktivierungseingangs (30) zur Aktivierung oder Deaktivierung des Antriebs (12-16) ausgewertet wird.

3. Antrieb (12-16) mit einer Schnittstelle (22) zur kommunikativen Verbindbarkeit mit anderen Antrieben (12-16) und/oder einer übergeordneten Einheit (18), wobei die Schnittstelle (22) zumindest einen Aktivierungseingang (30) zur Aktivierung oder Deaktivierung des Antriebs (12) umfasst,
**dadurch gekennzeichnet, dass**
der Antrieb (12-16) Auswertemittel (32) zur Auswertung einer Dauer eines vorgegebenen oder vorgebbaren Status des Aktivierungseingangs (30) umfasst,
das Auswertemittel (32) im Betrieb ein Synchronisationssignal (34) erzeugt, wenn der Aktivierungseingangs (30) einen vorgegebenen Status annimmt und
das Auswertemittel (32) im Betrieb ein Sondersignal (36) erzeugt, wenn der vorgegebene Status länger als eine durch einen vorgegebenen oder vorgebbaren Schwellwert kodierte Dauer ansteht.

4. Antrieb (12-16) nach Anspruch 3, wobei das Synchronisationssignal (34) antriebsintern als Startsignal für Synchronisationszwecke auswertbar ist.

5. Computerprogramm mit durch einen Computer ausführbaren Programmcodeanweisungen zur Implementierung des Verfahrens nach einem der Ansprüche 1 oder 2, wenn das Computerprogramm auf einem Computer ausgeführt wird.

6. Speichermedium mit einem durch einen Computer ausführbaren Computerprogramm gemäß Anspruch 5.

7. Computersystem, auf dem ein Computerprogramm nach Anspruch 5 geladen ist.

## Geänderte Patentansprüche

### Geänderte Patentansprüche gemäss Regel 137(2) EPÜ.

**1.** Verfahren zur Synchronisation mehrerer entfernt voneinander angeordneter und über einer Schnittstelle (22) und ein Kommunikationsmedium (20) mit einer übergeordneten Einheit (18) verbundener Antriebe,
wobei die Schnittstelle (22) zumindest einen Aktivierungseingang (30) zur Aktivierung oder Deaktivierung des Antriebs (12-16) umfasst,
**dadurch gekennzeichnet,**
**dass** zur Synchronisation dem Aktivierungseingang (30) für eine vorgegebene oder vorgebbare Dauer ein vorgegebener Status eingeprägt wird,
**dass** antriebsseitig der Wechsel des Aktivierungseingangs (30) auf den vorgegebenen Status als Startsignal für Synchronisationszwecke ausgewertet wird,
**dass** die vorgegebene Dauer unterhalb eines Schwellwertes liegt und
**dass** ein länger als eine durch den Schwellwert ausgedrückte Dauer anstehender Status des Aktivierungseingangs (30) zur Aktivierung oder Deaktivierung des Antriebs (12-16) ausgewertet wird.

**2.** Antrieb (12-16) mit einer Schnittstelle (22) zur kommunikativen Verbindbarkeit mit anderen Antrieben (12-16) und/oder einer übergeordneten Einheit (18), wobei die Schnittstelle (22) zumindest einen Aktivierungseingang (30) zur Aktivierung oder Deaktivierung des Antriebs (12) umfasst,
**dadurch gekennzeichnet,**
**dass** der Antrieb (12-16) Auswertemittel (32) zur Auswertung einer Dauer eines vorgegebenen oder vorgebbaren Status des Aktivierungseingangs (30) umfasst,
das Auswertemittel (32) im Betrieb ein Synchronisationssignal(34) erzeugt, wenn der Aktivierungseingang (30) einen vorgegebenen Status annimmt und das Auswertemittel (32) im Betrieb ein Sondersignal (36) erzeugt, wenn der vorgegebene Status länger als eine durch einen vorgegebenen oder vorgebbaren Schwellwert kodierte Dauer ansteht.

**3.** Antrieb (12-16) nach Anspruch 2, wobei das Synchronisationssignal (34) antriebsintern als Startsignal für Synchronisationszwecke auswertbar ist.

**4.** Computerprogramm mit durch einen Computer ausführbaren Programmcodeanweisungen zur Implementierung des Verfahrens nach einem der Ansprüche 1 oder 2, wenn das Computerprogramm auf einem Computer ausgeführt wird.

**5.** Speichermedium mit einem durch einen Computer ausführbaren Computerprogramm gemäß Anspruch 4.
